# EUROPÄISCHE PATENTANMELDUNG

(11) **EP 4 625 077 A1**
(43) Veröffentlichungstag der Anmeldung: **01.10.2025**
(21) Anmeldenummer: 24167386.2
(22) Anmeldetag: 28.03.2024
(51) Int. Cl.: G05B 19/409, G05B 19/418

(54) **LEITSYSTEM FÜR EINE TECHNISCHE ANLAGE, PROJEKTIERUNGSEINHEIT UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem für eine technische Anlage, insbesondere Fertigungs- oder Prozessanlage, das dazu ausgebildet ist, Prozesswerte von Komponenten der technischen Anlage mittels Automatisierungskomponenten des Leitsystems zu erfassen und zur Bedien- und -beobachtung auf grafischen Benutzeroberflächen in Anlagenbildern und Bildfenstern darzustellen, wobei Inhalte von externen Geräten oder Diensten, welche nicht Teil des Leitsystems sind, in den Anlagenbildern in eigenen Ablaufumgebungen eingebettet und in eigenen Bildfenstern dargestellt werden. Das Leitsystem ist dadurch gekennzeichnet, dass es dazu ausgebildet ist, Daten der in den Ablaufumgebungen eingebetteten Inhalte externer Geräte oder Dienste über mindestens eine Schnittstelle zu erfassen, in Prozesswerte des Leitsystems zu überführen, und verfahrenstechnisch derart zu integrieren, dass diese Daten gleichen Funktionalitäten unterliegen wie Prozesswerte der Automatisierungskomponenten des Leitsystems. Hierdurch wird eine verbesserte und homogene Bedienung und Beobachtung von Geräten und Diensten erreicht, die nicht Teil des Leitsystems sind.

## Beschreibung

Hinweis: Alle personenbezogenen Formulierungen in diesem Dokument sind geschlechtsneutral zu verstehen.

Die Erfindung betrifft ein Leitsystem für eine technische Anlage, insbesondere Fertigungs- oder Prozessanlage. Außerdem betrifft die Erfindung eine Projektierungseinheit für ein Leitsystem einer technischen Anlage und eine Verwendung eines Leitsystems zum Betrieb einer technischen Anlage.

Moderne Leitsysteme, wie sie in hochautomatisierten technischen Anlagen wie beispielsweise verfahrenstechnischen Anlagen der Prozessindustrie, Fertigungsanlagen oder Produktionsanlagen der Automobilindustrie, Kraftwerksanlagen etc. üblicherweise verwendet werden, bilden die Schnittstelle zwischen einem in der Anlage ablaufenden technischen Prozess und dem Bedienpersonal, welches den technischen Prozess steuern und/oder überwachen soll. Mittels Automatisierungskomponenten und einem Bedien- und Beobachtungssystem eines Leitsystems kann das Bedienpersonal auf alle relevanten Prozesswerte zugreifen und bei Bedarf in Form von Bedienhandlungen auf den Prozess einwirken.

Für die Bedienung und Beobachtung verfahrenstechnischer Anlagen werden symbolische Anlagenbilder (eng. Panels) erstellt, die die verfahrenstechnischen Zusammenhänge - insbesondere zwischen den Prozessobjekten der Komponenten der technischen Anlage - abstrahiert darstellen. Anlagenbilder werden im Engineering projektiert, d.h. die Bedien- und Anzeigeelemente der Anlagenbilder werden positioniert und deren Eigenschaften festgelegt. Zu den verschiedenen Bedien- und Anzeigeelementen gehören: statische Symbole (z.B. Leitungen, Rechtecke, usw.), dynamisierte Symbole (z.B. in Abhängigkeit von Prozesswerten Leitungen mit Farbumschlag, Rechtecke mit Füllständen, usw.), Block-Symbole (zur dynamisierten Visualisierung verfahrenstechnischer Prozessobjekte), komplexe Kontrollanzeigen (z.B. Trendanzeigen, Meldefolgeanzeigen, usw.) und so genannte Container, welche abgeschlossene Bildeinheiten darstellen, um Inhalte aus unabhängigen und eigenständigen Quellen, die nicht Teil des Leitsystems sind, visualisieren zu können. Beispiele hierfür sind Webcams oder andere IIoT-Geräte, Anlagenbilder modularer Anlagenteile (Package Units), Software-Applikationen (z.B. Apps zur Regleroptimierung, KPI Berechnungen), usw.

Container in Anlagenbildern werden durch unterschiedliche Technologien realisiert - in modernen weborientierten Leitsystemen z.B. durch so genannte iFrames oder auf Grundlage der iFrame basierten SWAC Technologie (SWAC = Siemens Web Application Collaboration). Bei der SWAC-Technologie handelt es sich um einen Mechanismus, der die Interoperabilität zwischen den Applikationen von Benutzern und Anbietern (im Folgenden als Dienste bezeichnet) fördert, da es immer notwendiger wird, verschiedene Applikationen in ein System zu integrieren, zum Beispiel eine Applikation von einer Kundenseite oder eine, die von einem Dienstleister zur Verfügung gestellt wird. Die SWAC-Technologie bietet die Möglichkeit, über das Internet auf Anwendungen zuzugreifen und fremde Webseiten einzubinden und stellt dazu entsprechende Schnittstellen: Web-basierte Schnittstellen oder auch API-Schnittstellen (API = Application Programming Interface) oder andere Kommunikationsschnittstellen.

Die in derartigen Containern gehosteten "Fremdinhalte" sind in der Regel interaktionsfrei mit dem Leitsystem in einer Art Sandkasten in einem Anlagenbild nur für die Beobachtung integriert und werden auch erst dann geladen und ausgeführt, wenn das Anlagenbild geöffnet ist. Kollaborationen mit anderen Basisfunktionen des Leitsystems sind auf diese Weise nicht möglich. Anlagenbilder weisen demnach Bedien- und Anzeigeelemente aus entkoppelten Applikationen und von externen Geräten auf und sind demzufolge sehr heterogen. Eine Modularität ist zur Adressierung von Industrie 4.0-Anforderungen (Industrial Internet of Things, abgekürzt IIoT) von flexiblen, modularen und dynamischen, re-konfigurierbaren Anlagen sinnvoll und notwendig, die Heterogenität jedoch stellt die Visualisierung in den Operator Station Clients im Hinblick auf Stabilität, Zuverlässigkeit und Leistungsfähigkeit vor entsprechende Herausforderungen. Die Bedienung und Beobachtung der Daten von externen Geräten und Diensten ist unzureichend. Es besteht demnach ein Bedarf, die Anlagenbilder zu homogenisieren, d.h. die Daten der externen Geräte und Dienste besser in das Leitsystem zu integrieren.

Es ist demnach eine Aufgabe der vorliegenden Erfindung, ein Leitsystem anzugeben, mittels dessen ein effizientes, homogenes und flexibleres Bedienen und Beobachten einer zu steuernden technischen Anlage erreicht wird und welches insbesondere eine verbesserte Integration externer Inhalte in das Leitsystem erlaubt.

Diese Aufgabe wird gelöst durch ein Leitsystem für eine technische Anlage mit den Merkmalen des Anspruchs 1. Außerdem wird die Aufgabe gelöst durch ein Projektierungseinheit mit den Merkmalen den Anspruchs 7 und durch eine Verwendung des Leitsystems zum Betrieb einer technischen Anlage gemäß Anspruch 12. Vorteilhafte Weiterbildungen ergeben sich aus den abhängigen Ansprüchen.

Das erfindungsgemäße Leitsystem für eine technische Anlage, insbesondere Fertigungs- oder Prozessanlage, ist dazu ausgebildet, Prozesswerte von Komponenten der technischen Anlage mittels Automatisierungskomponenten des Leitsystems zu erfassen und zur Bedien- und - beobachtung auf grafischen Benutzeroberflächen in Anlagenbildern und Bildfenstern darzustellen, wobei Inhalte von externen Geräten oder Diensten, welche nicht Teil des Leitsystems sind, in den Anlagenbildern in eigenen Ablaufumgebungen eingebettet und in eigenen Bildfenstern dargestellt werden. Das Leitsystem ist dadurch gekennzeichnet, dass es dazu ausgebildet ist, Daten der in den Ablaufumgebungen eingebetteten Inhalte externer Geräte oder Dienste über mindestens eine Schnittstelle zu erfassen, in Prozesswerte des Leitsystems zu überführen, und verfahrenstechnisch derart zu integrieren, dass diese Daten gleichen Funktionalitäten unterliegen wie Prozesswerte der Automatisierungskomponenten des Leitsystems. Hierdurch wird eine deutlich verbesserte Bedienung und Beobachtung von Geräten und Diensten erreicht, die nicht Teil des Leitsystems sind. Die Erfindung beruht somit auf dem Gedanken, bei einer entsprechend ausgestalteten Schnittstelle Daten aus den Ablaufumgebungen der externen Geräte oder Dienste zu extrahieren, sie in Prozesswerte umzuwandeln und in das Leitsystem zu integrieren.

Unter dem Begriff "Prozesswert" wird eine messbare Größe verstanden, die den Zustand oder die Eigenschaften eines laufenden Prozesses in der technischen Anlage beschreibt. Der Prozesswert in einer verfahrenstechnischen Anlage kann beispielsweise die Temperatur, den Druck, den Füllstand, den Durchfluss oder andere relevante Parameter umfassen. In dieser Beschreibung steht der Begriff Prozesswert für Werte, die mittels Messumformern im Takt des Automatisierungssystems erfasst und über eine Automatisierungskomponente dem Leitsystem zugeführt wird und vom Leitsystem weiterverarbeitet wird.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Ferner sind von dem Begriff der technischen Anlage auch Anlagen zur Energieerzeugung umfasst wie Windräder, Solaranlagen oder Kraftwerke jeglicher Art.

Unter einem Leitsystem wird im vorliegenden Kontext ein computergestütztes, technisches System verstanden, das Funktionalitäten zum Bedienen und Beobachten und Steuern und Regeln der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten, meist als Automatisierungskomponenten bezeichnet, umfassen, die zur Ansteuerung der Aktoren bzw. Sensoren dienen. Darüber hinaus kann das Leitsystem u.a. Mittel zur Visualisierung der technischen Anlage und zu einem Engineering aufweisen. Das Leitsystem kann optional auch weitere Recheneinheiten für komplexere Regelungen und Systeme zur Datenspeicherung und -verarbeitung umfassen.

Das Leitsystem ist bevorzugt dazu ausgebildet, die Daten externer Geräte oder Dienste zu integrieren, indem zumindest teilweise die Daten der Schnittstelle gemäß Vorgaben einer Projektierung in ein Prozessabbild übernommen werden, in dem eine für die externen Geräte oder Dienste eigene Datenstruktur erstellt wird, welche einer Datenstruktur für die Prozesswerte von Automatisierungskomponenten des Leitsystems entspricht. Letztendlich wird auf diese Weise auch für die externen Geräte und Dienste ein Prozessobjekt erzeugt. Durch den gleichen Aufbau der Datenstrukturen für die Prozessobjekte von Komponenten des Leitsystems und für die eines Geräts oder eines Dienstes von außerhalb des Leitsystems im Prozessabbild wird vorteilhaft für beide "Arten" von Daten die gleiche Weiterverarbeitung im Leitsystem erreicht. Die Software-Komponenten des Leitsystems unterscheiden nicht mehr zwischen externen und internen Daten, sondern sehen nur Prozesswerte, welche aus dem Prozessabbild kommen. Die Daten externer Geräte und Dienste werden durch die Erfindung softwaretechnisch genauso verarbeitet wie Prozesswerte aus der technischen Anlage selbst. Damit ist ein homogener Umgang mit Daten erreicht, welche von außerhalb des Leitsystems stammen, was auch in einer homogenen Visualisierung resultiert.

Dies führt vorteilhaft dazu, dass die Daten externer Geräte oder Dienste derart integriert werden, dass auch eine Kollaboration mit Diensten des Leitsystems umfasst ist, welche zumindest eine Darstellung von Trendkurven der Daten externer Geräte und Dienste und/oder eine Dynamisierung der Daten in Symbolen im Anlagenbild und/oder eine Auslösung verfahrenstechnischer Alarme umfasst. Kollaboration bedeutet, dass die Daten externer Geräte oder Dienste mit einer Vielzahl der Software-Komponenten der Software-Architektur des Leitsystems wechselwirken können und von diesen verarbeitet werden. Dabei kann es sich um Funktionalitäten wie der Archivierung, dem Daten-Management, dem Alarm-Service, dem Visualisierungsdienst oder einem Event-Manager handeln. Probleme, welche beim Betrieb der technischen Anlage auftreten, können auf diese Weise besser und schneller erfasst werden. Die Bedienung der externen Geräte oder Dienste wird damit deutlich effizienter.

Im Rahmen einer bevorzugten Weiterbildung der Erfindung ist das Leitsystem derart ausgebildet, dass während der Projektierung ausgewählt werden kann, welche Daten der externen Geräte oder Dienste in das Prozessabbild übernommen werden. Dies erlaubt eine besondere Flexibilität bei der Projektierung der technischen Anlage. Die Auswahl erfolgt während der Projektierung in einer dafür vorgesehenen Projektierungseinheit.

Die Aufgabe dieser Erfindung wird demzufolge ebenfalls durch eine Projektierungseinheit für ein Leitsystem einer technischen Anlage, insbesondere einer Fertigungs- oder Prozessanlage, gelöst, welche derart ausgebildet ist, dass über eine grafische Benutzeroberfläche Anlagenbilder und Bildfenster zur Bedienung und Beobachtung der technischen Anlage oder von Teilen davon, projektierbar und konfigurierbar sind. Die Projektierungseinheit ist dadurch gekennzeichnet, dass bei einer Konfiguration einer Ablaufumgebung mit Inhalten von Geräten oder Diensten, welche nicht Teil des Leitsystems und demnach extern sind, Daten dieser Inhalte über eine Schnittstelle ausgelesen werden und die für ein Prozessabbild des Leitsystems relevanten Daten der externen Geräte oder Dienste auf der grafischen Benutzeroberfläche auswählbar angezeigt werden, und die ausgewählten Daten in das Prozessabbild integriert werden. Die Projektierung führt ebenso zu einer verbesserten Bedien- und Beobachtbarkeit des in der technischen Anlage ablaufenden Prozesses.

In einer bevorzugten Ausführungsvariante erfolgt die Auswahl der für das Prozessabbild relevanten Daten der externen Geräte oder Dienste in einem Editor auf der graphischen Benutzeroberfläche der Projektierungseinheit anhand von eigens dafür vorgesehenen Symbolen. Dies ist besonders nutzerfreundlich und einfach.

Im Rahmen einer weiteren bevorzugten Weiterbildung der Erfindung ist das Leitsystem derart ausgebildet, dass während der Projektierung ausgewählt werden kann, in welchen Zyklen des Leitsystems die Daten der externen Geräte oder Dienste angezeigt werden sollen. Die Projektierungseinheit ist in dieser Ausführungsvariante derart ausgebildet, dass bei der Konfiguration der Ablaufumgebung und der Auswahl der zu integrierenden Daten der externen Geräte oder Dienste festlegbar ist, in welchen Zyklen des Leitsystems die Daten in einem Prozessabbild aktualisiert werden sollen. Dies kann beispielsweise anhand von Checkboxen im Editor erfolgen. Auf diese Weisen kann eine Informationsüberflutung im Leitsystem reduziert werden. Auch eine Optimierung der Systemleistung ist denkbar. Ferner kann es sinnvoll sein, Daten nur dann anzuzeigen, wenn bestimmte Ereignisse eintreten oder bestimmte Zustände erreicht werden. Bediener können dann gezielt auf wichtige Ereignisse reagieren und schneller handeln.

Vorteilhaft ist das Leitsystem derart ausgebildet, dass die Daten der externen Geräte oder Dienste an mindestens einen Proxy-Baustein übermittelt werden, bevor sie an das Prozessabbild übermittelt werden. Der Stellvertreter-Baustein hat somit die Funktion, im laufenden Betrieb des Leitsystems die Daten des externen Gerätes oder Dienstes abzuholen. Er dient somit als Zwischenschicht zwischen der Ablaufumgebung des externen Gerätes oder Dienstes und dem Prozessabbild. Letzteres kann sich beispielsweise auf einem Server befinden oder in einer Cloud, während die Ablaufumgebung auf einem Client oder einem mobilen Gerät ist. Der Proxy-Baustein kann somit eine zusätzliche Sicherheitsebene bieten, den eingehenden Datenverkehr zu überwachen, zu analysieren, zu filtern und zu kontrollieren.

Die erfindungsgemäße Projektierungseinheit ist ferner derart ausgebildet, dass sie über eine Schnittstelle mit dem Leitsystem verbunden ist und die entsprechende Konfiguration der Ablaufumgebung samt dem zugehörigen Prozessabbild der externen Geräte oder Dienste in eine dafür vorgesehene Datenbank des Leitsystems übertragbar ist. Auf diese Weise wird über das Prozessabbild die Konfiguration jedes Anlagenbildes mit den erfindungsgemäß konfigurierten Ablaufumgebungen der externen Geräte und Dienste im Leitsystem hinterlegt, so dass im laufenden Betrieb auf diese Konfiguration zurückgegriffen werden kann.

Die zuvor formulierte Aufgabe wird zudem gelöst durch die Verwendung eines Leitsystems - wie zuvor erläutert - zum Betrieb einer technischen Anlage, insbesondere einer Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
FIG 1 eine graphische Benutzeroberfläche einer Projektierungseinheit während der Engineering-Phase gemäß einem Ausführungsbeispiel dieser Erfindung und
FIG 2 ein Funktionsschema eines Ausführungsbeispiels des erfindungsgemäßen Leitsystems mit zugehöriger Softwarearchitektur.

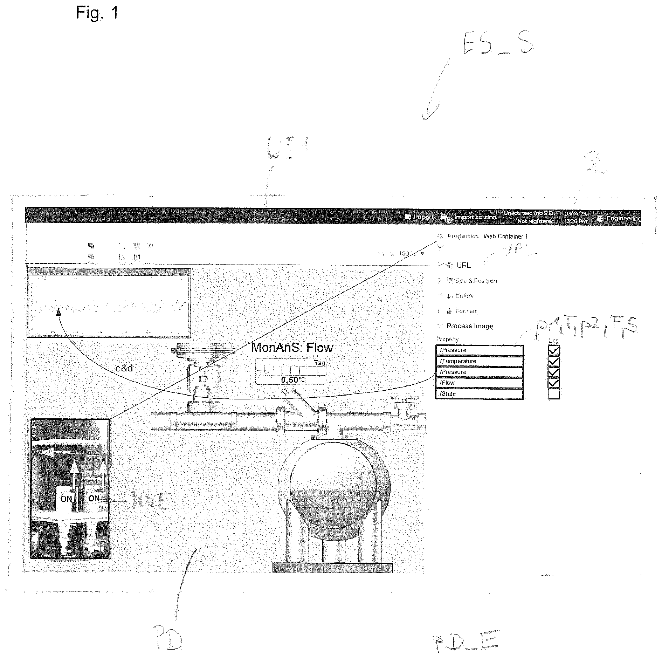

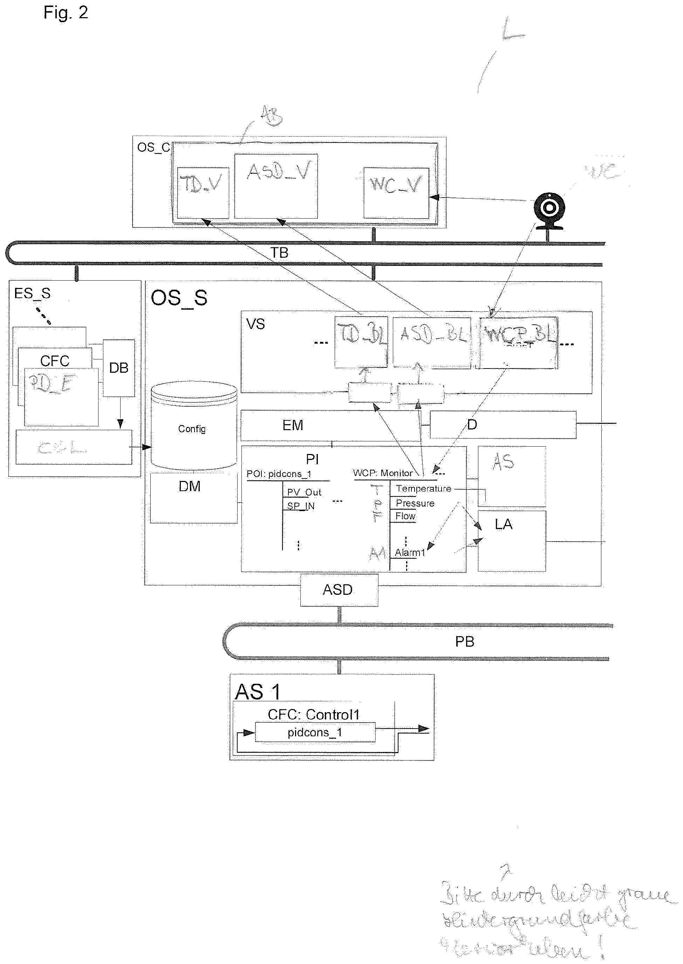

Figur 1 zeigt beispielhaft eine graphische Benutzeroberfläche UI1 einer Projektierungseinheit ES_S. Wie bereits erwähnt werden Anlagenbilder in Engineering-Phasen entweder vor Inbetriebnahme einer technischen Anlage oder auch parallel zum laufenden Betrieb projektiert, d.h. alle Bildelemente, Symbole, Dynamisierungen, komplexe Kontrollanzeigen, Container, usw., welche im Zusammenhang mit Komponenten der technischen Anlage stehen, werden im Anlagenbild positioniert und deren Eigenschaften werden festgelegt. Im Funktionsschema der Fig. 2 ist als Ausführungsbeispiel ein Engineering-Server ES_S mit einigen für die Erzeugung von Anlagenbildern notwendigen Software-Komponenten (hier in Form von Rechtecken, abgekürzt SW-Komponenten) skizziert. Der Engineering-Server ES_S ist über einen Kommunikationsbus TB mit dem Leitsystem L verbunden.

Für die Vorkonfiguration der Anlagenbilder ist die SW-Komponente PD_E im Engineering-Server ES_S zuständig. Im Anlagenbild-Editor PD_E ist demnach hinterlegt, welches Bildelement von welcher Kategorie in einem bestimmten Anlagenbild vorhanden ist. Die SW-Komponente PD_E ist mit einer Datenbank DB verbunden, in der sämtliche Projektierungsdaten und Konfigurationen von Anlagenbildern abgelegt sind. Im Engineering-Server sind insbesondere die Funktionspläne CFC (engl. "Continuous Function Chart"), die zur graphischen Programmierung von Steuerungsabläufen im Leitsystem verwendet werden, mit ihren Konfigurationen betreffend z.B. die Ansteuerung von Automatisierungskomponenten enthalten. Nach der Konfiguration der Anlagenbilder oder der Programmierung der Funktionspläne werden diese mittels der Komponente C&L kompiliert und als Konfigurationsdateien in einer Konfigurationsdatenbank Config des Operation Station Servers OS_S geladen.

Im Allgemeinen handelt es sich bei dem Engineering-Server ES_S um eine Ausführungsvariante einer Projektierungseinheit. Es können zentrale Projektierungseinheiten, welche sich zentral an einem Ort, beispielsweise in einem Kontrollraum, befinden und dezentrale Projektierungseinheiten unterschieden werden. Bei Letzterer gibt es mehrere Projektierungseinheiten, die z.B. über die technische Anlage verteilt sind. Jede Einheit ist für einen bestimmten Bereich oder eine bestimmte Anlagenteil zuständig. In einigen Fällen können Projektierungseinheiten mobil ausgestaltet sein, beispielsweise als Tablet oder Smartphone sein, was bedeutet, dass sie sich physisch bewegen lassen. Mit fortschreitender Technologie können Projektierungseinheiten auch virtuell sein, das heißt, sie existieren als Software-Instanzen auf einem Computer oder Server. Dies ermöglicht eine flexible Verwaltung und Skalierung der Projektierungseinheiten je nach Bedarf.

Eine Projektierungseinheit umfasst oder ist mit einem Anzeigemittel wie einem Bildschirm oder einem Client-Rechner verbunden. Auf dieser Anzeigeeinheit können die Anlagenbilder und Bildfenster über eine grafische Benutzeroberfläche UI1 projektiert und konfiguriert werden. Im Ausführungsbeispiel von Fig. 1 wird zum Projektieren ein Anlagenbildeditor PD_E verwendet. Auf der linken Seite der Benutzeroberfläche UI1 ist das zu projektierende Anlagenbild PD gezeigt, auf der rechten Seite ist eine Eigenschaftenleiste SB (engl. "Property Sidebar") mit graphischen Symbolen zum Festlegen der Eigenschaften und Konfigurieren der im Anlagenbild PD dargestellten Bildelemente.

In dem in Fig. 1 dargestellten Anlagenbildeditor ist ein Ausführungsbeispiel für das erfindungsgemäße Engineering von Geräten oder Diensten dargestellt, welche nicht Teil des Leitsystems sind. Es kann sich dabei um beliebige IIoT-Geräte oder Software-Applikationen handeln. Voraussetzung ist, dass solche Geräte oder Dienste ein Web-basiertes Frontend anbieten können. Ein Web-basiertes Frontend ist eine Web-Seite, die über einen Webbrowser aufgerufen wird und es Benutzern ermöglicht, mit einer Anwendung oder einem System zu interagieren. Auf ein Web-basiertes Frontend kann per URL zugegriffen werden. URL steht für "Uniform Ressource Locator" (Einheitlicher Ressourcenanzeiger). Es handelt sich demnach um die Adresse oder den Link, der verwendet wird, um auf eine bestimmte Ressource im Internet zuzugreifen. Zur Einbettung eines IIoT-Gerätes in einen Web-Container des Leitsystems, wird beispielsweise in eine Adressleiste URL der Eigenschaftsleiste SD in Fig. 1 die entsprechende URL eingegeben werden. Diese URL kann eine Kombination aus dem Protokoll (z. B. "http://" oder "https://"), dem Domainnamen oder der IP-Adresse des Servers und einem spezifischen Pfad zur gewünschten Seite oder Funktion sein. Über eine entsprechend konfigurierte Schnittstelle kann dann auf das Web-basierte Frontend zugegriffen werden und alle Funktionen und Inhalte genutzt werden, die es bietet. Dies bedeutet, dass über das Web-basierte Frontend auch Daten erfasst werden können, die mit einem zugehörigen Gerät oder Dienst verknüpft sind und bei denen es sich um "Fremdinhalte" handelt, die nicht originär aus dem Leitsystem stammen. Als Schnittstelle bieten sich Standard-Interfaces wie sie von der iFrame oder der SWAC-Technologie bereitgestellt werden, über die fremde Web-Seiten in Web-Container eingebettet werden können.

Durch Nutzung des Web-basierten Frontends im Engineering-Kontext können Daten der externen Geräte und Dienste in das Leitsystem eingebunden werden. Im Ausführungsbeispiel aus Fig.1 werden über das Web-basierte Frontend der modularen Mischer-Einheit MME nach Eingabe der entsprechenden URL die mit der Mischer-Einheit verknüpften Daten eines ersten Drucks p1, einer Temperatur T, eines zweiten Drucks p2, eines Durchflusses F und eines Zustandswertes S erfasst. Diese Daten (p1, T, p2, F, S) werden anschließend tabellarisch in der Eigenschaftenleiste SB als Eigenschaften (engl. "properties") des zugehörigen Web-Containers angezeigt. Über Checkboxen kann in diesem Ausführungsbeispiel für jedes ermittelte "Property" (Eigenschaft) der Schnittstelle festgelegt werden, ob sie als Prozesswerte in ein Prozessabbild des Leitsystems übernommen werden soll. Sollen Properties als Prozesswerte in das Prozessabbild übernommen werden, kann ebenfalls festgelegt werden, in welchen Zyklen die Prozesswerte im Prozessabbild aktualisiert werden sollen. Per Drag&Drop (d&d)-Funktionalität können für markierte Properties (Daten des externen Gerätes) nun beispielsweise Trendkurven erstellt werden. Bei einer solchen Verschiebeoperation zieht der Projekteur nach Markierung der Property in der Eigenschaftsleiste den Cursor auf einen Bereich des Anlagenbildes und wählt dort eine von dem Leitsystem bereitgestellte Darstellungsform (hier eine Trendanzeige) aus.

In Fig. 2 ist ein Funktionsschema eines Ausführungsbeispiels eines erfindungsgemäßen Leitsystems L mit einer zugehörigen Softwarearchitektur gezeigt.

Im vorliegenden Ausführungsbeispiel umfasst das Leitsystem L einen Operator Station Client OS_C, einen Operator Station Server OS_S und eine Automatisierungskomponente AS1. Das Leitsystem kann selbstverständlich eine Vielzahl von Operator Station Clients, Servern und Automatisierungskomponenten aufweisen. Die Automatisierungskomponenten sind einerseits über einen Anlagenbus PB mit den Operator Station Servern und andererseits zur Feldebene hin über mindestens einen weiteren hier nicht dargestellten Bus mit dezentralen Peripherien verbunden, an welche eine Vielzahl von Feldgeräten (Sensoren, Aktuatoren, hier nicht dargestellt) angeschlossen sind.

Ein Bedien- und Beobachtungssystem, welches als Teil eines Leitsystems verstanden werden kann, besteht in der Regel aus einer Vielzahl von Operator Station Servern und zumindest einem Client Rechner OS_C. Der Operator Station Client OS_C tauscht über ein weiteres Bussystem TB, welches hier als Terminalbus bezeichnet wird, Informationen und Daten mit den Operator Station Servern aus. Häufig ist das Leitsystem derart ausgebildet, dass es eine weitere Komponente, eine Engineering Workstation ES_S, besitzt. Bei dieser handelt es sich in diesem Ausführungsbeispiel um einen stationären oder mobilen Rechner oder Server, der zur Datenübertragung an mindestens eines der Kommunikationssysteme TB und PB angeschlossen ist, und auf den ebenso über einen Client des Bedien- und Beobachtungssystems zugegriffen werden kann. Bei Bedarf können noch weitere Rechner oder Server mit den Kommunikationssystemen TB und PB verbunden werden.

In Fig. 2 ist neben den Hardware-Komponenten des Leitsystems stellvertretend für Komponenten, welche nicht Teil des Leitsystems sind, eine Webcam WC dargestellt. Gemäß der Aufgabe der vorliegenden Erfindung sollen die Daten und die Funktionalität der Webcam nicht nur ins Leitsystem eingebunden, sondern vollständig verfahrenstechnisch integriert werden.

In Fig. 2 sind neben Teilen der soeben beschriebenen Hardware-Komponenten des Leitsystems auch Teile der Software-Architektur in vereinfachter Form dargestellt. Hierbei sind SW-Komponenten in Form von Rechtecken dargestellt. Wechselwirkungen zwischen erfindungsrelevanten SW-Komponenten sind durch Pfeile angedeutet.

In dem Operator Station Server OS_S ist ein Visualisierungsdienst VS integriert, der übergeordnet für die Visualisierung des in einer technischen Anlage ablaufenden Prozesses zur Runtime (= Laufzeit), also während des laufenden Betriebs, verantwortlich ist, und über den eine Übertragung von (Visualisierungs-)Daten vom Operator Station Server OS_S an den Operator Station Client OS_C erfolgt. Der Visualisierungsdienst VS stellt über verschiedene Logik-Komponenten das Anlagenbild AB mit all seinen statischen und dynamischen Bildelementen bereit. Zu jeder Logik-Komponente im Visualisierungsdient des Operator Station Servers gehört eine entsprechende Darstellungskomponente im Operator Station Client. So erzeugt ein Verlaufsdiagrammdienst TD_BL (engl. "Trend Display Business Logic") im Visualisierungsdienst VS unter Einbeziehung aller Prozesswerte aus dem Prozessabbild PI ein Verlaufsdiagramm (engl. "Trend") TD_V, welches zur visuellen Darstellung an den Operator Station Client übertragen wird. Ein Alarmübersichtsanzeigendienst ASD_BL (engl. "Alarm Summary Display Business Logic") im Visualisierungsdienst VS erzeugt unter Einbeziehung aller Prozesswerte aus dem Prozessabbild PI eine Alarmübersichtsanzeige (engl. Alarm Summary Diaplay") ASD_V, welche zur visuellen Darstellung an den Operator Station Client übertragen wird.

Das Anlagenbild AB aus dem in Fig. 2 gezeigten Ausführungsbeispiel umfasst zusätzlich ein Bild der Webcam WC. Die Kamera steht stellvertretend für Geräte und Dienste (Software-Applikationen), die ein Web-basiertes Frontend mit geeigneter Schnittstelle anbieten können. Davon sind sämtliche edge-Geräte, oder IIoT-Geräte umfasst. Diese werden zur Darstellung ihrer Daten üblicherweise in so genannten Web-Container eingebettet (hier Web-Container WC_V).

Ein Web-Container in der Software-Technik ist eine Ablaufumgebung, die es ermöglicht, Webanwendungen auszuführen. Die Hauptfunktion eines Web-Containers besteht darin, die Webanwendungen zu isolieren und ihnen eine sichere und kontrollierte Umgebung zur Ausführung zu bieten. Er ermöglicht die Ausführung von serverseitigem Code und die Ausführung von Servlets, die als Java-Klassen geschrieben sind und HTTP-Anfragen verarbeiten können. Mit einem solchen Container lassen sich demnach Objekte auf einem Bedienfeld, also einer graphischen Benutzeroberfläche eines Leitsystems, einbinden.

Erfindungsgemäß wird nun nach Einbettung des externen Gerätes oder Dienstes in den Web-Container (hier Web-Kamera WC in Web Container WC_V) ein so genannter Web-Container Proxy-Dienst (engl "Web Container Proxy Business Logic") im Visualisierungsdienst erzeugt. Ein Web-Container Proxy fungiert als Vermittler und ermöglicht die effiziente Weiterleitung von Anfragen an den entsprechenden Web-Container. Die Hauptfunktion eines Web-Container Proxies besteht darin, den eingehenden Datenverkehr abzuholen, zu überwachen und Anfragen weiterzuleiten. Aufgrund der Voreinstellungen im Engineering (vgl. Fig. 1) im Anlagenbildeditor, werden nun die in der Schnittstelle vorhandenen Properties des im Container integrierten Web Frontends des Geräts oder Dienstes in Prozesswerte des Prozessabbildes PI des Operator Station Servers überführt, um die damit überführten Daten für einen weiteren Ausbau des Anlagenbildes (Trendkurven...) verwenden zu können. Werden Teile der Daten aus der Schnittstelle in das Prozessabbild PI übernommen, wird für den Web-Container eine Datenstruktur angelegt, welche die Daten der externen Geräte und Dienste beinhalten (hier WCP Monitor). Diese Daten werden nach Anlegen der Datenstruktur im Prozessabbild PI wie Prozesswerte behandelt, welche von Automatisierungskomponenten (hier AS1) des Leitsystems stammen. Dies bedeutet, dass diese Daten der externen Geräte und Dienste wie andere Prozesswerte im lokalen Archiv LA archiviert werden. Weiterhin können aus diesen Prozesswerten durch weitere Konfiguration auch Alarme über den Alarmservice AS erzeugt werden.

Die derart erzeugte Datenstruktur WCP Monitor besitzt nun die gleiche Struktur wie das Prozessobjekt POl: pidcons_1 im Prozessabbild PI, welches mit dem Funktionsbaustein pidcons_1 der Automatisierungskomponente AS1 in Wirkverbindung steht. In an sich bekannter Weise werden die in den Anlagenbildern dargestellten Bildelemente durch Prozesswerte von so genannten Prozessobjekten POls gespeist oder dynamisiert, die in einem Prozessabbild (PI, vgl. Fig. 2) des Operator Station Servers OS_S des Leitsystems lokalisiert sind. Der Begriff "dynamisiert" wird hier stellvertretend für eine zeitliche Änderung der Prozesswerte und damit auch für die zeitliche Änderung der Visualisierung der technischen Komponente verwendet. Diese zeitliche Änderung kann entweder durch den Prozess selbst (Temperaturmesswert eines Behälters ändert sich) oder durch einen Operator (Eingabe: "Erhitze den Behälter auf eine Temperatur von 100°C") hervorgerufen werden. Das computerimplementierte, im Prozessabbild PI lokalisierte Prozessobjekt ist stets einer technischen Komponente der technischen Anlage zugeordnet und steht mit dieser in Wirkverbindung. Gemäß dieser Erfindung jedoch, ist die Datenstruktur WCP, welche mit Daten eines externen Gerätes oder Dienstes befüllt ist, genauso aufgebaut wie das Prozessobjekt einer technischen Komponente der technischen Anlage. Auf diese Weise kann zwischen dieser Datenstruktur eines externen Gerätes oder Dienstes eine Kollaboration mit anderen SW-Komponenten des Leitsystems stattfinden: mit dem Daten-Management DM, dem Event-Manager EM oder der Verteilkomponente D. Die beschriebene Integration der Daten der externen Geräte und Dienste bewirkt insbesondere, dass Alarme und Meldungen durch die Komponente des Event-Managers EM aus der Komponente des Prozessabbildes PI entnommen und in dieser aufbereitet werden. Die unterschiedlichen Meldeklassen, insbesondere die Alarme, werden zusammen mit anderen darzustellenden Variablen, wie beispielsweise den Prozesswerten, an den Visualisierungsservice VS weitergegeben, wo eine weitere Verarbeitung in den weiteren Logiken stattfinden kann. Damit ist ein Alarmmanagement realisiert, wie es sonst nur mit "echten" Prozesswerten aus dem Leitsystem möglich ist. Auf diese Weise ist eine vollkommene verfahrenstechnische Integration erreicht, die auch eine Kollaboration mit den anderen SW-Komponenten des Operator Station Servers erlaubt.

Wurden demnach die relevanten Property-Daten der im Web-Container integrierten externen Geräte und Dienste in das Prozessabbild PI übernommen, werden diese Daten der externen Geräte und Dienste nicht nur als Prozesswert archiviert, sondern auch im Sinne einer verbesserten Bedienung und Beobachtung weiterverwendet, z.B. um
- eine Trendkurve zu konfigurieren,
- andere Symbole im Anlagenbild grafisch zu dynamisieren (z.B. Farbumschlag eines Druckbehälters bei hohem Druck),
- oder sogar, um verfahrenstechnische Alarme auszulösen, wenn ein Prozesswert einen Wert überschreitet (z.B. wenn der Druck einen Schwellwert übersteigt)

In Web-Containern eingebettete Geräte oder Dienste mit Web Frontend sind somit im verfahrenstechnischen Sinne voll integrierbar und können an anderen Funktionen des Leitsystems partizipieren.

## Patentansprüche

1. Leitsystem für eine technische Anlage, insbesondere Fertigungs- oder Prozessanlage, das dazu ausgebildet ist, Prozesswerte von Komponenten der technischen Anlage mittels Automatisierungskomponenten des Leitsystems zu erfassen und zur Bedien- und
- beobachtung auf grafischen Benutzeroberflächen in Anlagenbildern und Bildfenstern darzustellen, wobei Inhalte von externen Geräten oder Diensten, welche nicht Teil des Leitsystems sind, in den Anlagenbildern in eigenen Ablaufumgebungen eingebettet und in eigenen Bildfenstern dargestellt werden,
**dadurch gekennzeichnet, dass**
das Leitsystem ferner dazu ausgebildet ist, Daten der in den Ablaufumgebungen eingebetteten Inhalte externer Geräte oder Dienste über mindestens eine Schnittstelle zu erfassen, in Prozesswerte des Leitsystems zu überführen, und verfahrenstechnisch derart zu integrieren, dass diese Daten gleichen Funktionalitäten unterliegen wie Prozesswerte der Automatisierungskomponenten des Leitsystems.

2. Leitsystem nach Anspruch 1, das ferner dazu ausgebildet ist, die Daten externer Geräte oder Dienste zu integrieren, indem zumindest teilweise die Daten der Schnittstelle gemäß Vorgaben einer Projektierung in ein Prozessabbild übernommen werden, in dem eine für die externen Geräte oder Dienste eigene Datenstruktur erstellt wird, welche einer Datenstruktur für die Prozesswerte von Automatisierungskomponenten des Leitsystems entspricht.

3. Leitsystem nach Anspruch 1 oder 2, das ferner dazu ausgebildet ist, die Daten externer Geräte oder Dienste derart zu integrieren, dass auch eine Kollaboration mit Diensten des Leitsystems umfasst ist, wobei diese zumindest eine Darstellung von Trendkurven der Daten und/oder eine Dynamisierung der Daten in Symbolen im Anlagenbild und/oder eine Auslösung verfahrenstechnischer Alarme umfasst.

4. Leitsystem nach einem der vorhergehenden Ansprüche, das derart ausgebildet ist, dass während der Projektierung ausgewählt werden kann, welche Daten der externen Geräte oder Dienste in das Prozessabbild übernommen werden.

5. Leitsystem nach einem der vorhergehenden Ansprüche, das derart ausgebildet ist, dass während der Projektierung ausgewählt werden kann, in welchen Zyklen des Leitsystems die Daten der externen Geräte oder Dienste angezeigt werden sollen.

6. Leitsystem nach einem der vorhergehenden Ansprüche, das derart ausgebildet ist, dass die Daten der externen Geräte oder Dienste an mindestens einen Proxy-Baustein übermittelt werden, bevor sie an das Prozessabbild übermittelt werden.

7. Projektierungseinheit für ein Leitsystem einer technischen Anlage, insbesondere Fertigungs- oder Prozessanlage, welche derart ausgebildet ist, dass über eine grafische Benutzeroberfläche (UI) Anlagenbilder und Bildfenster zur Bedienung und Beobachtung der technischen Anlage oder von Teilen davon, projektierbar und konfigurierbar sind,
**dadurch gekennzeichnet,**
**dass** die Einheit ferner dazu ausgebildet ist, bei einer Konfiguration einer Ablaufumgebung mit Inhalten von Geräten oder Diensten, welche nicht Teil des Leitsystems und demnach extern sind, Daten dieser Inhalte über eine Schnittstelle auszulesen und die für ein Prozessabbild des Leitsystems relevanten Daten der externen Geräte oder Dienste auf der grafischen Benutzeroberfläche (UI) auswählbar anzuzeigen, und die ausgewählten Daten in das Prozessabbild zu integrieren.

8. Projektierungseinheit nach Anspruch 7,
**dadurch gekennzeichnet,**
**dass** auf der grafischen Benutzeroberfläche ein Anlagenbildeditor zur Konfiguration der Ablaufumgebung vorgesehen ist, welcher Symbole zur Auswahl der zu integrierenden Daten der externen Geräte oder Dienste enthält.

9. Projektierungseinheit nach Anspruch 7 oder 8,
**dadurch gekennzeichnet,**
**dass** die Projektierungseinheit ferner derart ausgebildet ist, dass bei der Konfiguration der Ablaufumgebung und der Auswahl der zu integrierenden Daten der externen Geräte oder Dienste festlegbar ist, in welchen Zyklen des Leitsystems die Daten einem Prozessabbild aktualisiert werden sollen.

10. Projektierungseinheit nach einem der Ansprüche 7 bis 9,
**dadurch gekennzeichnet,**
**dass** die Projektierungseinheit ferner derart ausgebildet ist, Trendkurven der Daten der externen Geräte oder Dienste zu konfigurieren, zu den Daten zugehörige Symbole im Anlagenbild grafisch zu dynamisieren und/oder verfahrenstechnische Alarme zu konfigurieren, wenn ein Wert der Daten der externen Geräte oder Dienste einen Schwellwert überschreitet.

11. Projektierungseinheit nach einem der Ansprüche 7 bis 10,
**dadurch gekennzeichnet,**
**dass** die Projektierungseinheit ferner derart ausgebildet ist, dass die Projektierungseinheit über eine Schnittstelle mit dem Leitsystem verbunden ist und die entsprechende Konfiguration der Ablaufumgebung samt dem zugehörigen Prozessabbild der externen Geräte oder Dienste in eine dafür vorgesehene Datenbank des Leitsystems übertragbar ist.

12. Verwendung eines Leitsystems gemäß einem der Ansprüche 1 bis 6 zum Betrieb einer technischen Anlage, insbesondere Fertigungs- oder Prozessanlage.
